# EUROPÄISCHE PATENTANMELDUNG

(11) **EP 2 764 906 A1**
(43) Veröffentlichungstag der Anmeldung: **13.08.2014**
(21) Anmeldenummer: 13154519.6
(22) Anmeldetag: 08.02.2013
(51) Int. Cl.: B01D 53/14

(54) **Verfahren zur Entfernung von Absorptiven aus absorptivhaltigen Gasen oder Gasgemischen unter Ausnutzung von Mischungslücken**

(71) Anmelder: Uhde Inventa-Fischer GmbH, 13509 Berlin (DE)
(72) Erfinder: Kujath, Steffen, 7013 Domat/Ems (CH)
(74) Vertreter: Pfenning, Meinig & Partner GbR

(57) **Zusammenfassung**

Die vorliegende Erfindung betrifft ein Verfahren zur Entfernung eines Absorptivs aus absorptivhaltigen Gasen oder Gasgemischen, bei dem das Gas oder Gasgemisch mit einem flüssigen Gemisch aus Absorptionsmittel und Absorptiv oder flüssigem Absorptiv-freiem Absorptionsmittel kontaktiert wird, wobei das Absorptiv zumindest zum Teil von dem flüssigen Gemisch aus Absorptionsmittel und Absorptiv absorbiert und darin angereichert wird oder vom flüssigem Absorptiv-freiem Absorptionsmittel unter Ausbildung eines flüssigen Gemischs aus Absorptionsmittel und Absorptiv absorbiert wird. Kennzeichnet beim Verfahren gemäß der vorliegenden Erfindung ist, dass das eingesetzte Absorptionsmittel und das eingesetzte Absorptiv eine Mischungslücke aufweisen.

## Beschreibung

Die vorliegende Erfindung betrifft ein Verfahren zur Entfernung eines Absorptivs aus absorptivhaltigen Gasen oder Gasgemischen, bei dem das Gas oder Gasgemisch mit einem flüssigen Gemisch aus Absorptionsmittel und Absorptiv oder flüssigem Absorptiv-freiem Absorptionsmittel kontaktiert wird, wobei das Absorptiv zumindest zum Teil von dem flüssigen Gemisch aus Absorptionsmittel und Absorptiv absorbiert und darin angereichert wird oder vom flüssigem Absorptiv-freiem Absorptionsmittel unter Ausbildung eines flüssigen Gemischs aus Absorptionsmittel und Absorptiv absorbiert wird. Kennzeichnet beim Verfahren gemäß der vorliegenden Erfindung ist, dass das eingesetzte Absorptionsmittel und das eingesetzte Absorptiv eine Mischungslücke aufweisen.

Das erfindungsgemäße Verfahren eignet sich insbesondere zur ökologisch vorteilhaften Abscheidung von Kohlenwasserstoffen (KW) aus Gasgemischen durch Absorption und/oder Adsorption, wobei der oder die KW in Verbindung mit einem geeigneten Lösemittel binäre, trinäre oder höherphasige Flüssigkeitsgemische ausbilden und die absorptivarme und/oder adsorbatarme Phase rezirkuliert wird.

Bei der Abscheidung von KW aus Gasen kommen unterschiedliche Verfahren zum Einsatz, bei denen die KW zur Rückgewinnung abgetrennt oder unschädlich gemacht werden. Besonders bei komplexeren KW ist deren Rückgewinnung aus ökonomischen und ökologischen Gesichtspunkten wünschenswert.

In Abgasen enthaltene KW können der Verbrennung zugeführt werden, wodurch in der Regel die Eliminierung schädlicher Stoffe im Vordergrund steht und zugleich der Brennwert der KW thermisch genutzt werden kann. Neben der Kondensation oder Sublimation gasförmiger KW kommen auch Sieb- und Filtrationsverfahren zum Einsatz um KW in Feststoffform oder als Tröpfchen abzuscheiden. Weiterhin können in Gasen enthaltene KW durch Membranverfahren abgetrennt, an Feststoffen oder Flüssigkeiten adsorbiert oder in Lösemitteln absorbiert werden. In der Patentliteratur werden u.a. Absorptionsverfahren beschrieben, bei denen Absorptionsmittel zum Einsatz kommen, welche den flüchtigen Stoff aufnehmen und ihn an einen anderen, anschließend beigemischten Stoff abgeben, so dass das Absorptionsmittel wieder zur neuen Absorption verfügbar wird.

Nachteilig hierbei ist allerdings, dass ein einmal durch ein Absorptionsmittel absorbierter Stoff aus diesem Absorptionsmittel durch Zusatz eines weiteren Stoffes wieder "herausgelöst" werden muss. Dies ist zum einen unökonomisch, da weitere zusätzliche Stoffe eingesetzt werden müssen, andererseits ist dadurch ebenso wenig eine vollständige Entfernung des zu absorbierenden Stoffes (Absorptiv) gewährleistet.

Es ist daher Aufgabe der vorliegenden Erfindung, ein einfaches, ökonomisch und ökologisch besonders geeignetes Verfahren zur Abtrennung von Absorptiven aus absorptivhaltigen Gasgemischen anzugeben. Diese Aufgabe wird mit den Merkmalen des Patentanspruchs 1 gelöst, wobei die abhängigen Patentansprüche vorteilhafte Weiterbildungen darstellen.

Erfindungsgemäß wird somit ein Verfahren zur Entfernung eines Absorptivs aus absorptivhaltigen Gasen oder Gasgemischen, bei dem das Gas oder Gasgemisch mit einem flüssigen Gemisch aus Absorptionsmittel und Absorptiv oder flüssigem Absorptiv-freiem Absorptionsmittel kontaktiert wird, wobei das Absorptiv zumindest zum Teil von dem flüssigen Gemisch aus Absorptionsmittel und Absorptiv absorbiert und darin angereichert wird oder vom flüssigem Absorptiv-freiem Absorptionsmittel unter Ausbildung eines flüssigen Gemischs aus Absorptionsmittel und Absorptiv absorbiert wird. Kennzeichnend beim Verfahren gemäß der vorliegenden Erfindung ist, dass das eingesetzte Absorptionsmittel und das eingesetzte Absorptiv eine Mischungslücke aufweisen.

Erfindungsgemäß wird unter dem Terminus "Absorptiv" ein Stoff verstanden, der in Gasen oder Gasgemischen gasförmig oder als Aerosol vorliegt und den es aus dem Gas oder Gasgemischen abzutrennen gilt. Die erfindungsgemäße Abtrennung erfolgt dabei mittels Absorption mittels eines Absorptionsmittels.

Als Mischungslücke wird ein Bereich einer binären, ternären oder mehrphasigen Mischung aus Absorptionsmittel und mindestens eines Absorptivs verstanden, indem eine bedingte Mischbarkeit zwischen Absorptionsmittel und Absorptiv gegeben ist, d.h. mindestens zwei separate Phasen, nämlich eine absorptivreiche und absorptivarme Phase, vorliegen.

In einer bevorzugten Ausführungsform ist das Absorptiv ein Kohlenwasserstoff und das Absorptionsmittel ein Lösungsmittel, wobei das System aus Absorptiv (Kohlenwasserstoff) und Absorptionsmittel (Lösungsmittel) eine Mischungslücke aufweist. Bevorzugte Systeme aus Kohlenwasserstoff/Lösungsmittel sind hierbei ausgewählt aus der Gruppe bestehend aus Phenol/Wasser, Hexan/Nitrobenzol, Triethylamin/Wasser, Methylvinylketon/Wasser, Octanol/Wasser, Acetaldehyd/Vinylacetat und Nikotin/Wasser.

Insbesondere eignet sich die vorliegende Erfindung zur Abtrennung von gasförmigem Phenol und/oder Phenol-Aerosolen aus Phenol-haltigen Gasen oder Gasgemischen, als Absorptionsmittel wird dabei Wasser bzw. ein Wasser-Phenol Gemisch verwendet.

Eine weitere bevorzugte Ausführungsform des erfindungsgemäßen Verfahrens sieht vor, dass das Gemisch aus Absorptionsmittel und Absorptiv Phenol/Wasser-Gemisch mit einem Gewichtsverhältnis von Phenol/Wasser < 75:25, bevorzugt 0,01:99,99 ≤ Phenol/Wasser ≤ 70:30, weiter bevorzugt 0,1:99,9 ≤ Phenol/Wasser ≤ 50:50, weiter bevorzugt 1:99 ≤ Phenol/Wasser ≤ 10:90 ist.

Für den Fall, dass zur Absorption des Absorptivs aus dem absorptivhaltigen Gas bzw. Gasgemisch bereits ein Gemisch aus Absorptiv und Absorptionsmittel verwendet wird, ist es bevorzugt, wenn das Mischungsverhältnis zwischen Absorptiv und Absorptionsmittel des mit dem Gas oder Gasgemisch kontaktierten flüssigen Gemischs aus Absorptiv und Absorptionsmittel so gewählt ist, dass eine einphasige absorptionsmittelreiche Mischung (Lösung aus Absorptiv in Absorptionsmittel) vorliegt.

Ferner ist es vorteilhaft, wenn nach Kontaktierung des flüssigen Gemischs aus Absorptionsmittel und Absorptiv oder des flüssigen absorptivfreien Absorptionsmittels mit dem absorptivhaltigen Gas oder Gasgemisch und zumindest teilweiser Absorption und Anreicherung des Absorptivs im flüssigen Gemisch oder im flüssigen absorptivfreien Absorptionsmittel eine Separation des resultierenden flüssigen Gemischs vom Gas oder Gasgemisch erfolgt, das separierte flüssige Gemisch auf Temperaturen und Drücke eingestellt wird, so dass das flüssige Gemisch sich im Bereich der Mischungslücke befindet, wobei eine Phasenauftrennung in mindestens eine absorptivreiche und eine absorptivarme Phase erfolgt und eine Phasenseparation der absorptivreichen und absorptivarmen Phase durchgeführt wird, wobei die Phasenseparation bevorzugt in einem Phasenabscheider durchgeführt wird.

Zudem ermöglicht es die vorliegende Erfindung, die separierte absorptivarme Phase im Kreislauf zu führen und erneut mit dem Gas oder Gasgemisch zu kontaktieren. Dabei kann ebenso eine Rückgewinnung des Absorptionsmittels aus der absorptivreichen Phase erfolgen, insbesondere durch Destillation, Rektifikation, Fällung, Elektrolyse, Membrantrennverfahren oder Kristallisation. Insofern wird eine äußerst ökonomisch und ökologisch vorteilhafte Verfahrensbildung gewährleistet.

Vorteilhaft ist weiterhin, wenn der im Kreislauf geführten absorptivarmen Phase vor oder während der Kontaktierung mit dem Gas oder Gasgemisch frisches und/oder durch Abtrennung des Absorptionsmittels aus der absorptivreichen Phase rückgewonnenes Absorptionsmittel zugesetzt wird.

Eine weiter bevorzugte Ausführungsform des erfindungsgemäßen Verfahrens sieht vor, dass das Gas oder Gasgemisch mindestens einen weiteren Stoff, der mit dem flüssigen Gemisch aus Absorptiv und Absorptionsmittel oder dem flüssigen Absorptiv-freien Absorptionsmittel mindestens eine separate Phase ausbildet, enthält, der bei Kontaktierung mit dem flüssigen Gemisch oder flüssigem Absorptiv-freien Absorptionsmittel gleichzeitig mit dem Absorptiv zumindest teilweise aus den Gas oder Gasgemisch abgetrennt und in dem flüssigen Gemisch angereichert oder in dem flüssigen Absorptiv-freien Absorptionsmittel unter Ausbildung eines flüssigen Gemischs aus Absorptionsmittel und Absorptiv absorbiert wird. Dieser Stoff kann nach Separation des resultierenden flüssigen Gemischs vom Gas oder Gasgemisch durch Phasenseparation, insbesondere in einem Phasenabscheider, abgetrennt werden. Der mindestens eine weitere Stoff ist bevorzugt ausgewählt aus der Gruppe bestehend aus Ölen und/oder Fetten. An die Phasenseparation anschließend oder gleichzeitig wird das flüssige Gemisch auf Temperaturen und Drücke eingestellt, so dass das flüssige Gemisch sich im Bereich der Mischungslücke befindet, wobei eine Phasenauftrennung in eine absorptivreiche und eine absorptivarme Phase erfolgt und eine Phasenseparation der absorptivreichen und absorptivarmen Phase durchgeführt wird. Hierbei scheidet sich der weitere Stoff durch Ausbildung einer weiteren separaten Phase ab.

Ebenso vorteilhaft ist, wenn das flüssige Gemisch oder flüssige Absorptiv-freie Absorptionsmittel während der Kontaktierung und/oder das resultierende flüssige Gemisch während der Phasenseparation eine Temperatur im Bereich von 0 und 60 °C, bevorzugt von 4 und 50 °C, besonders bevorzugt von 5 und 30 °C, insbesondere von 6 bis 15 °C aufweist.

Zusätzlich oder alternativ hierzu ist es ebenso möglich, dass das Gas oder das Gasgemisch während der Kontaktierung eine Temperatur im Bereich von 0 bis 400 °C, bevorzugt von 40 bis 300 °C aufweist.

Hinsichtlich einzusetzender Gase oder Gasgemische unterliegt das erfindungsgemäße Verfahren keiner Beschränkung. Vorteilhafterweise sind die Gase bzw. Gasgemische jedoch ausgewählt aus der Gruppe bestehend aus Stickstoff, Sauerstoff, Luft, Wasserstoff, Helium, Kohlendioxid, Ammoniak, Neon, Argon, Fluor, Chlor, flüchtigen Kohlenwasserstoffen, C4-Schnittgas, gasförmigem Absorptiv, gasförmigem Absorptionsmittel und/oder hieraus resultierenden Gasgemischen.

In einer weiteren vorteilhaften Ausführungsform wird die Kontaktierung des flüssigen Gemischs aus Absorptionsmittel und Absorptiv oder des flüssigen Absorptiv-freien Absorptionsmittels mit dem Gas oder Gasgemisch in einem Behälter, in einem Apparat, in einem Tank, in einer Rohrleitung, in einer Maschine, einer Kolonne, in einer Kolonne mit oder ohne Einbauten, in einer mindestens eine Trennstufe aufweisenden Kolonne, in einer mindestens eine Packung aufweisenden Kolonne, in einem Sprühkondensator, in einem Fallfilmapparat, in einem Rieselapparat, in einem Strahlapparat, in einem Dampfstrahler, einer Dampfstrahl-Vakuumpumpe, einer Flüssigkeitsstrahlpumpe, einer Flüssigkeitsringpumpe, in einem Sättiger, in einem Nebelapparat, in einem Demister, in einem Filter, in einem getränkten oder befeuchteten Filter oder an der Oberfläche einer Membran durchgeführt.

Vorteilhaft werden Kolonnen mit oder ohne Einbauten oder eine mindestens eine Trennstufe aufweisende Kolonne verwendet, die Verfahrensführung erfolgt dabei bevorzugt derart, dass das flüssige Gemisch aus Absorptionsmittel und Absorptiv oder das flüssige Absorptiv-freie Absorptionsmittel im Gegenstrom, insbesondere von oben nach unten zum Gas oder Gasgemisch geführt wird.

Weiter bevorzugt ist, wenn das Gas oder Gasgemisch aus Brüden von Polymerisations- oder Polykondensationsprozessen und/oder der Beschleierung von Apparaten und/oder der Evakuierung von Apparaten und/oder der Verdampfung innerhalb von Apparaten oder Maschinen herrührt.

Hierbei ist es insbesondere bevorzugt, wenn die Polykondensationsprozesse insbesondere ausgewählt sind aus der Gruppe bestehend aus unter gegenüber Normalbedingungen verminderten Drücken durchgeführten Schmelzphasenpolykondensationen, insbesondere bei der Herstellung von Polycarbonaten, Polyphosphaten oder Copolymeren aus Polycarbonaten und Polyphosphaten, bei denen phenolhaltige Brüden anfallen.

Die vorliegende Erfindung wird anhand der nachfolgenden Ausführungen und der beigefügten Figuren näher erläutert, ohne die Erfindung auf die dargestellten Ausführungen zu beschränken.

Es ist bekannt, dass ein Flüssigkeitsgemisch aus Phenol und Wasser unterhalb des oberen kritischen Punktes der Lösung eine Mischungslücke aufweist. Das heißt, dass ein solches Gemisch in zwei Phasen unterschiedlicher Zusammensetzung zerfällt, sofern sich die gemittelte Zusammensetzung des Gemisches innerhalb der Mischungslücke befindet. Es hat sich gezeigt, dass sich bei Wasser-Phenol-Gemischen eine bei niedrigen Temperaturen, womit ein bevorzugter Temperaturbereich zwischen 5°Cund 30°C gemeint ist, rezirkuliert phenolarme (absorptivarme) Phase hervorragend zur Absorption von Phenol (Absorptiv) aus Gasgemischen eignet und sich dabei eine zweite, phenolreiche Phase ausbildet, die leicht und energieeffizient durch einen Phasenabscheider abgeschieden werden kann. Weiterhin erlaubt das Phenol/WasserGemisch die Ad- und/oder Absorption und Kondensation von Stoffen, die sich nicht oder nur gering in dem binären Stoffgemisch lösen lassen. Somit können sich neben den beiden Phasen des binären Gemisches weitere Phasen ausbilden.

Die hier beschrieben Erfindung macht sich eben dieses Prinzip zu Nutze, um im technischen Maßstab KW, wie z.B. Phenol oder Hilfsstoffe, aus Gasgemischen zu entfernen und eine energetisch günstige Aufbereitung, Weiterverarbeitung oder Entsorgung zu ermöglichen. Anders als bei den herkömmlich eingesetzten Verfahren zur Abtrennung von KW aus Gasgemischen kommt hier aus wirtschaftlichen Gründen ein im Kreis geführtes Absorptionsmittel zum Einsatz, welches bereits beim Eintritt in die Waschapparatur den zu absorbierenden Stoff (Absorptiv) enthält und mit diesem ein binäres oder bei Vorliegen von Stoffen, die nur eine geringe Löslichkeit mit dem Absorptionsmittel oder Absorptiv verfügen, ein ternäres oder höherphasiges Gemisch ausbildet.

Die zu absorbierenden Stoffe werden bevorzugt mit der absorptivarmen Phase des binären Gemisches in Kontakt gebracht. Die Waschflüssigkeit reichert sich mit dem zu absorbierenden Stoff, bspw. einem Kohlenwasserstoff an. Aufgrund der Mischungslücke zwischen Absorptiv und Absorptionsmittel kommt es zur Phasentrennung, einem binären Gemisch zwischen angereicherter und absorptivarmer Phase. Zudem können durch die beiden Phasen des binären Gemisches weitere Stoffe, wie z.B. Öle, kondensiert und/oder ab- oder adsorbiert werden, welche über eine geringe Löslichkeit mit den beiden Phasen des binären Gemisches verfügen. Bei einer derartigen Konstellation bilden sich Stoffgemische mit drei und mehr Phasen aus. Mittels Phasenabscheider können die binären, ternären und höherphasigen Gemische unter minimalem energetischem Aufwand aufgetrennt werden. Anschließend kann die Phase des binären Gemisches durch herkömmliche, verfahrenstechnische Maßnahmen z.B. Destillation, Rektifikation, Fällung, Elektrolyse, durch Membrantrennverfahren oder Kristallisation aufgetrennt werden.

Ebenso ist es möglich, die zu absorbierenden Stoffe mit der absorptivreichen Phase zu kontaktieren.

Im Falle einer thermischen Verwertung kommt der erhöhte Anteil an KW der absorptivreichen Phase, im Besonderen bei Verwendung wässriger Lösemittel, entgegnen, da im Idealfall nicht oder weniger zugefeuert werden müsste. Die im Kreis geführte absorptivarme Phase wird nach Abscheidung der absorptivreichen Phase wieder der Gaswaschapparatur zugeführt. Durch mit der absorptivreichen Phase ausgeschleustes Absorptionsmedium wird ergänzt - idealer Weise bedient man sich des aus der Auftrennung der absorptivreichen Phase zurück gewonnenen Absorptionsmittels.

Neben der energetisch günstigen Gasreinigung und stofflichen Auftrennung lassen sich die Flüssigkeitsphasen in anderen Teilen des Prozesses einsetzen. Die DE 10 2005 018 843 A1 schreibt zum Betrieb von Dampfstrahl-Vakuumpumpen im Bereich der Polykondensation beim Polycarbonatprozess "Dies führt aber zu einem ganz wesentlichen Umweltproblem, nämlich dem Anfall großer Mengen an mit beispielsweise Phenolen, Dialkoholen und Oligomeren verunreinigtem Abwasser". Die Nutzung der Mischungslücke ermöglicht somit den Einsatz von Stoffgemischen aus Phenol und Wasser zum Betrieb von z.B. Dampfstrahl-Vakuum-, Flüssigkeitsstrahl-, Flüssigkeitsringpumpen oder aber auch von Sprühkondensatoren.

Je nach Anwendungsfall könnte die bis zu ca. 75 % Phenol enthaltende (absorptivreiche) Phase oder aber die bis zu 94 % Wasser enthaltende (absorptivarme) Phase im Rahmen des Prozesses genutzt werden. Zugleich ermöglicht das Verfahren, im Gas enthaltene Öldämpfe zu kondensieren und Öltröpfchen zu adsorbieren, wie sie z.B. beim Einsatz von mechanischen Vakuumpumpen auftreten können. Das Öl scheidet sich im Fall eines Gemisches aus Phenol und Wasser im Phasenabscheider als eine dritte Phase ab. Die Öl-Phase kann abgetrennt, aufbereitet und in den Ölkreislauf zurückgeführt werden. Bei Verwendung von Pumpen, die mit einem Ballastgas gespiesen werden, kann je nach Reinheit und Rückführungsmenge des Öls auf eine Aufbereitung verzichtet werden';

Der technische Nutzen dieser Erfindung erstreckt sich insbesondere auf diejenigen verfahrenstechnischen Bereiche, in denen eine Mischungslücke zwischen einem aus einem Gas zu absorbierenden Absorptiv, z.B. eines Kohlenwasserstoffes (KW) und dessen Absorptionsmittel auftritt oder ein aus einem Gas zu entfernender KW mittels flüssigem Absorptionsmedium zu adsorbieren und/oder kondensieren sind und zumindest eine Phase der rezirkulierten Gaswaschflüssigkeit erneut der Gaswäsche oder einem anderen Teil des Prozesses als Hilfsstoff, Schmiermittel oder Prozessmedium zugeführt wird. Besonders profitierten können Prozesse, bei denen werthaltige, umweltbedenkliche oder giftige KW als Produkte, Neben- oder Koppelprodukte entstehen. Hier wäre besonders das als giftig, gesundheitsgefährdend und ätzend klassifizierte Phenol zu nennen. Phenol ist eine bedeutende Grundchemikalie, die zur Synthese zahlreicher Stoffe Anwendung findet. Sie tritt in der petrochemischen Industrie, Textilindustrie, Pharmaindustrie und der Kunststoffindustrie als Ausgangsstoff, Produkt, Neben- oder Koppelprodukt auf. Bei der Herstellung von Polykondensaten wie z.B. Polycarbonaten, Polyphosphonaten und deren Co-Polymeren durch Schmelzphasenpolykondensation tritt Phenol in der Gasphase als Koppelprodukt auf, das über Brüdenleitungen durch das Vakuumsystem abgezogen wird. Um die aus dem Vakuumsystem tretenden Abgase aufzureinigen, kann das hier beschriebene Verfahren Anwendung finden. Dabei wird die Mischungslücke eines Phenol-Wasser-Gemisches genutzt, die zwischen etwa 4 °C und dem kritischen Punkt bei ca. 67°C auftritt. Die Mischungslücke erstreckt sich über einen Bereich von etwa 6 % bis 75 Gew. -% Phenolanteil. Um den Dampfdruck des Phenols im Rahmen einer Abgasreinigung gering zu halten, wird bevorzugt eine Temperatur von 5 °C bis 30°C gewählt. Mit sinkender Temperatur sinkt die Phasentrenngeschwindigkeit, während sich die Konzentration der Phasen weiter zu den Reinstoffen verschiebt. Es hat sich als vorteilhaft erwiesen, für die Phasentrennung Temperaturen zwischen 6 °C und 15°C anzustreben. Temperaturbedingt wird die phenolarme Waschflüssigkeit (Phenolanteil von ca. 6 % Phenol) mit dem phenolhaltigen Abgas in Kontakt gebracht. Dabei erweist es sich als vorteilhaft, die Waschflüssigkeit von oben nach unten im Gegenstrom zu dem Abgas durch eine mit einer Packung versehene Kolonne zu leiten. Die Effizienz des Verfahrens wurde beim Betrieb einer Versuchsanlage zur Herstellung von Polyphosphonaten nachgewiesen, da der im Abgas enthaltene Phenolanteil von etwa 6000 ppm auf ca. 30 ppm reduziert werden kann (Waschflüssigkeitstemperatur 12°C). Neben den beiden Phasen des binären Gemisches aus Phenol und Wasser bildet sich eine dritte Phase, die aus dem Vakuumpumpenöl einer im Rahmen des Prozesses eingesetzten Drehschieber-Pumpe besteht. Aufgrund deren Unempfindlichkeit gegen Feuchtigkeit und Phenol (ständiger Ballastgasstrom) kann das Öl unter Berücksichtigung der für die Pumpe zulässigen Feuchtigkeit des Betriebsöls der Pumpe wieder zugeführt werden

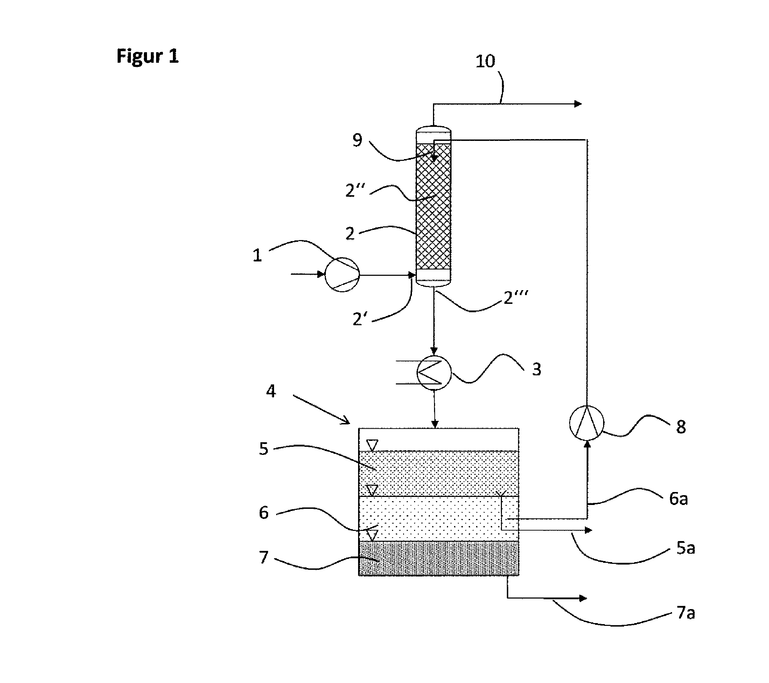

Figur 1 zeigt eine Anordnung, mit der das erfindungsgemäße Verfahren durchgeführt werden kann. Die in Figur 1 dargestellte Anordnung wird anhand des Beispiels der Abtrennung von Phenol aus phenolhaltigen Gasen oder Gasgemischen mittels Wasser bzw. einer Phenolarmen Phase eines Phenol/Wassergemisches erläutert.

Die Abtrennung des Phenols aus den Gasen bzw. Gasgemischen durch Absorption erfolgt gemäß Figur 1 mittels einer Kolonne 2. Die Gase bzw. Gasgemische können aus Prozess-Abgasen stammen, beispielsweise aus der Kolonne 2 vorgeschalteter Reaktionsvorrichtungen 1. Die hieraus resultierenden Prozessabgase werden über einen Einlass 2' der Kolonne 2 zugeführt. Zur Verbesserung der Kontaktierung des Absorptionsmittels mit den Gasen bzw. Gasgemischen weist die Kolonne 2 Einbauten 2" bzw. Mittel zur Vergrößerung der Oberfläche wie Gitter oder Schüttungen etc, auf. Das Absorptionsmittel, beispielsweise die phenolarme Phase eines Phenol/Wassergemisches wird von oben über einen Einlass 9 der Kolonne 2 zugeführt, sodass das flüssige Absorptionsmittel beispielsweise in die Kolonne 2 eingerieselt werden kann. Das Gas bzw. Gasgemisch wird somit im Gegenstrom zum Absorptionsmittel geführt. Der gereinigte bzw. absorptivarme Gasstrom wird am Kopf der Kolonne 2 über einen Auslass 10 aufgenommen. Das von oben nach unten fallende Absorptiv wird am Boden der Kolonne 2 gesammelt, über einen Auslass 2'" entnommen und einem Phasenabscheider 4 zugeführt. Beispielsweise können noch Mittel zur Temperierung des Absorptiv- angereicherten Absorptionsmittel wie z.B. Wärmetausche 3 zwischen Kolonne 2 und Phasenabscheider 4 angebracht sein. Im Phasenabscheider 4 erfolgt eine Auftrennung in eine absorptivreiche, d.h. phenolreiche Phase 7 eines Phenol/Wassergemisches sowie eine absorptivarme Phase 7, d.h. eine phenolarme Phase 6 eines Phenol/Wassergemisches 7 bzw. 6. Für den Fall, dass den Gasen bzw. Gasgemischen gleichzeitig Öle oder andere Kohlenwasserstoffe ausgewaschen werden, bildet sich eine weitere Ölphase 5. Die jeweiligen Phasen 5,6,7 werden über entsprechende Auslässe 5a, 6a, 7a dem Phasenabscheider entnommen. Die Phenolreiche Phase 7 wird zur weiteren Verwertung rückgewonnen, dies kann beispielsweise die Abtrennung des Wasseranteils aus der phenolreichen Phenol/Wasserphase und somit die Gewinnung reinen Phenols sein. Die phenolarme Phase 6 wird beispielsweise über eine Pumpe rezirkuliert und erneut der Kolonne 2 zur erneuten Absorption des Absorptivs aus den Gasen bzw. Gasgemischen verwendet.

## Patentansprüche

1. Verfahren zur Entfernung eines Absorptivs aus absorptivhaltigen Gasen oder Gasgemischen, bei dem das Gas oder Gasgemisch mit einem flüssigen Gemisch aus Absorptionsmittel und Absorptiv oder flüssigem Absorptiv-freiem Absorptionsmittel kontaktiert wird, wobei das Absorptiv zumindest zum Teil von dem flüssigen Gemisch aus Absorptionsmittel und Absorptiv absorbiert und darin angereichert wird oder vom flüssigem Absorptiv-freiem Absorptionsmittel unter Ausbildung eines flüssigen Gemischs aus Absorptionsmittel und Absorptiv absorbiert wird,
**dadurch gekennzeichnet, dass**
Absorptionsmittel und Absorptiv eine Mischungslücke aufweisen.

2. Verfahren nach vorhergehendem Anspruch, **dadurch gekennzeichnet, dass** das eine Mischungslücke aufweisende System aus Absorptiv/Absorptionsmittel ein eine Mischungslücke aufweisendes System aus einem Kohlenwasserstoff (Absorptiv) und einem Lösungsmittel (Absorptionsmittel) ist.

3. Verfahren nach vorhergehendem Anspruch, **dadurch gekennzeichnet, dass** das Kohlenwasserstoff/Lösungsmittelsystem ausgewählt ist aus der Gruppe bestehend aus Phenol/Wasser, Hexan/Nitrobenzol, Triethylamin/Wasser, Methylvinylketon/Wasser, Octanol/Wasser, Acetaldehyd/Vinylacetat und Nikotin/Wasser.

4. Verfahren nach einem der vorhergehenden Ansprüche, **dadurch gekennzeichnet, dass** das Gemisch aus Absorptionsmittel und Absorptiv ein Gemisch eines Kohlenwasserstoffes und eines Lösungsmittels ist, wobei das Kohlenwasserstoff/Lösungsmittelgemisch ein Phenol/Wasser-Gemisch mit einem Gewichtsverhältnis von Phenol/Wasser < 75:25, bevorzugt 0,01:99,99 ≤ Phenol/Wasser ≤ 70:30, weiter bevorzugt 0,1:99,9 ≤ Phenol/Wasser ≤ 50:50, weiter bevorzugt 1:99 ≤ Phenol/Wasser ≤ 10:90 ist.

5. Verfahren nach einem der vorhergehenden Ansprüche, **dadurch gekennzeichnet, dass** das Mischungsverhältnis zwischen Absorptiv und Absorptionsmittel des mit dem Gas oder Gasgemisch kontaktierten flüssigen Gemischs aus Absorptiv und Absorptionsmittel so gewählt ist, dass eine einphasige absoprtionsmittelreiche Mischung (Lösung aus Absorptiv in Absorptionsmittel) vorliegt.

6. Verfahren nach einem der vorhergehenden Ansprüche, **dadurch gekennzeichnet, dass** nach Kontaktierung des flüssigen Gemischs aus Absorptionsmittel und Absorptiv oder des flüssigen absorptivfreien Absorptionsmittels mit dem absorptivhaltigen Gas oder Gasgemisch und zumindest teilweiser Absorption und Anreicherung des Absorptivs im flüssigen Gemisch oder im flüssigen absorptivfreien Absorptionsmittel eine Separation des resultierenden flüssigen Gemischs vom Gas oder Gasgemisch erfolgt, das separierte flüssige Gemisch auf Temperaturen und Drücke eingestellt wird, so dass das flüssige Gemisch sich im Bereich der Mischungslücke befindet, wobei eine Phasenauftrennung in mindestens eine absorptivreiche und eine absorptivarme Phase erfolgt und eine Phasenseparation der absorptivreichen und absorptivarme Phase durchgeführt wird, wobei die Phasenseparation bevorzugt in einem Phasenabscheider durchgeführt wird.

7. Verfahren nach vorhergehendem Anspruch, **dadurch gekennzeichnet, dass** die separierte absorptivarme Phase im Kreislauf geführt und erneut mit dem Gas oder Gasgemisch kontaktiert wird und/oder das Absorptionsmittel aus der absorptivreichen Phase rückgewonnen wird, insbesondere durch Destillation, Rektifikation, Fällung, Elektrolyse, Membrantrennverfahren oder Kristallisation.

8. Verfahren nach vorhergehendem Anspruch, **dadurch gekennzeichnet, dass** der im Kreislauf geführten absorptivarmen Phase vor oder während der Kontaktierung mit dem Gas oder Gasgemisch frisches und/oder durch Abtrennung des Absorptionsmittels aus der Absorptivreichen Phase rückgewonnenes Absorptionsmittel zugesetzt wird.

9. Verfahren nach einem der vorhergehenden Ansprüche, **dadurch gekennzeichnet, dass** das Gas oder Gasgemisch mindestens einen weiteren Stoff, der mit dem flüssigen Gemisch aus Absorptiv und Absorptionsmittel oder dem flüssigen Absorptiv-freien Absorptionsmittel mindestens eine separate Phase ausbildet, enthält, der bei Kontaktierung mit dem flüssigen Gemisch oder flüssigem Absorptiv-freiem Absorptionsmittel gleichzeitig mit dem Absorptiv zumindest teilweise aus den Gas oder Gasgemisch abgetrennt und in dem flüssigen Gemisch angereichert oder in dem flüssigen Absorptiv-freiem Absorptionsmittel unter Ausbildung eines flüssigen Gemischs aus Absorptionsmittel und Absorptiv absorbiert wird; nach Separation des resultierenden flüssigen Gemischs vom Gas oder Gasgemisch durch Phasenseparation, insbesondere in einem Phasenabscheider, abgetrennt wird, wobei der mindestens eine weitere Stoff bevorzugt ausgewählt ist aus der Gruppe bestehend aus Ölen und/oder Fetten; anschließend oder gleichzeitig das flüssige Gemisch auf Temperaturen und Drücke eingestellt wird, so dass das flüssige Gemisch sich im Bereich der Mischungslücke befindet, wobei eine Phasenauftrennung in eine absorptivreiche und eine absorptivarme Phase erfolgt und eine Phasenseparation der absorptivreichen und absorptivarmen Phase durchgeführt wird.

10. Verfahren nach einem der vorhergehenden Ansprüche, **dadurch gekennzeichnet, dass**
a) das flüssige Gemisch oder flüssige Absorptiv-freie Absorptionsmittel während der Kontaktierung und/oder das resultierende flüssige Gemisch während der Phasenseparation eine Temperatur im Bereich von 0 und 60 °C, bevorzugt von 4 und 50 °C, besonders bevorzugt von 5 und 30 °C, insbesondere von 6 bis 15 °C und/oder
b) das Gas oder das Gasgemisch während der Kontaktierung eine Temperatur im Bereich von 0 bis 400 °C, bevorzugt von 40 bis 300 °C,
aufweist.

11. Verfahren nach einem der vorhergehenden Ansprüche, **dadurch gekennzeichnet, dass** das Gas oder das Gasgemisch ausgewählt ist aus der Gruppe bestehend aus Stickstoff, Sauerstoff, Luft, Wasserstoff, Helium, Kohlendioxid, Ammoniak, Neon, Argon, Fluor, Chlor, flüchtige Kohlenwasserstoffe, C4-Schnittgas, gasförmigem Absorptiv, gasförmigem Absorptionsmittel und/oder hieraus resultierenden Gasgemischen.

12. Verfahren nach einem der vorhergehenden Ansprüche, **dadurch gekennzeichnet, dass** die Kontaktierung des flüssigen Gemischs aus Absorptionsmittel und Absorptiv oder des flüssigen Absorptiv-freien Absorptionsmittels mit dem Gas oder Gasgemisch in einem Behälter, in einem Apparat, in einem Tank, in einer Rohrleitung, in einer Maschine, einer Kolonne, in einer Kolonne mit oder ohne Einbauten, in einer mindestens eine Trennstufe aufweisenden Kolonne, in einer mindestens eine Packung aufweisenden Kolonne, in einem Sprühkondensator, in einem Fallfilmapparat, in einem Rieselapparat, in einem Strahlapparat, in einem Dampfstrahler, einer Dampfstrahl-Vakuumpumpe, einer Flüssigkeitsstrahlpumpe, einer Flüssigkeitsringpumpe, in einem Sättiger, in einem Nebelapparat, in einem Demister, in einem Filter, in einem getränkten oder befeuchteten Filter oder an der Oberfläche einer Membran durchgeführt wird.

13. Verfahren nach vorhergehendem Anspruch, **dadurch gekennzeichnet, dass** eine Kolonne mit oder ohne Einbauten oder eine mindestens eine Trennstufe aufweisende Kolonne verwendet wird, wobei das flüssige Gemisch aus Absorptionsmittel und Absorptiv oder das flüssige Absorptiv-freie Absorptionsmittel im Gegenstrom, insbesondere von oben nach unten zum Gas oder Gasgemisch geführt wird.

14. Verfahren nach einem der vorhergehenden Ansprüche, **dadurch gekennzeichnet, dass** das Gas oder Gasgemisch aus Brüden von Polymerisations- oder Polykondensationsprozessen und/oder der Beschleierung von Apparaten und/oder der Evakuierung von Apparaten und/oder der Verdampfung innerhalb von Apparaten oder Maschinen herrührt.

15. Verfahren nach vorhergehendem Anspruch, **dadurch gekennzeichnet, dass** die Polykondensationsprozesse insbesondere ausgewählt sind aus der Gruppe bestehend aus unter gegenüber Normalbedingungen verminderten Drücken durchgeführten Schmelzphasenpolykondensationen, insbesondere bei der Herstellung von Polycarbonaten, Polyphosphaten oder Copolymeren aus Polycarbonaten und Polyphosphaten, bei denen phenolhaltige Brüden anfallen.
